# EUROPÄISCHE PATENTANMELDUNG

(11) **EP 1 936 230 A1**
(43) Veröffentlichungstag der Anmeldung: **25.06.2008**
(21) Anmeldenummer: 07023433.1
(22) Anmeldetag: 04.12.2007
(51) Int. Cl.: F16D 69/04

(54) **Verfahren zur Befestigung eines Reibbelags an einer Kupplungsscheibe und Kupplungsscheibe**

(30) Priorität: 20.12.2006 DE 102006060235; 17.11.2007 DE 102007055038
(71) Anmelder: ZF Friedrichshafen AG, 88038 Friedrichshafen (DE)
(72) Erfinder: Wickel, Christian, 97797 Wartmannsroth (DE)

(57) **Zusammenfassung**

Die Erfindung betrifft ein Verfahren zur Befestigung eines Reibbelags (1) an einer Kupplungsscheibe (2), insbesondere an einer Belagfeder der Kupplungsscheibe, das die Schritte aufweist: a) Aufbringen eines Klebstoffs (3) auf einer Seite (4) der Kupplungsscheibe (2) und/oder auf einer Seite (5) des Reibbelags (1); b) Fügen des Reibbelags (1) und der Kupplungsscheibe (2); c) Aushärtenlassen des Klebstoffs (3) zwischen dem Reibbelag (1) und der Kupplungsscheibe (2). Um bei voller Beibehaltung der Festigkeit der Klebverbindung umweltfreundlicher arbeiten zu können, sieht die Erfindung vor, dass das Aufbringen des Klebstoffs (3) auf die Kupplungsscheibe (2) und/oder auf den Reibbelag (1) gemäß Schritt a) in Pulverform erfolgt. Des Weiteren betrifft die Erfindung eine nach diesem Verfahren hergestellte Kupplungsscheibe.

## Beschreibung

Die Erfindung betrifft ein Verfahren zur Befestigung eines Reibbelags an einer Kupplungsscheibe, insbesondere an einer Belagfeder der Kupplungsscheibe, das die Schritte aufweist:
a) Aufbringen eines Klebstoffs auf einer Seite der Kupplungsscheibe und/oder auf einer Seite des Reibbelags;
b) Fügen des Reibbelags und der Kupplungsscheibe;
c) Aushärtenlassen des Klebstoffs zwischen dem Reibbelag und der Kupplungsscheibe.

Des Weiteren betrifft die Erfindung eine nach diesem Verfahren hergestellte Kupplungsscheibe.

Es ist als eine der Möglichkeiten im Stand der Technik bekannt, Reibbeläge an Kupplungsscheiben mittels einer Klebeverbindung zu fixieren. Die Reibbeläge werden hiernach also auf dem Kupplungsscheibenkörper aufgeklebt. Solche bzw. ähnliche Lösungen werden beispielsweise in der DE 31 45 054 A1, in der DE 100 15 206 A1 und in der EP 0 342 865 A1 beschrieben. Es hat sich dabei als vorteilhaft erwiesen, dass ein relativ großes Reibbelag-Verschleißvolumen zur Verfügung steht. Bei aufgenieteten Reibbelägen, wie sie ansonsten weit gebräuchlich sind, kann der Reibbelag meist nur soweit verschlissen werden, bis die Höhe des Nietkopfs erreicht wird, weil ab diesem Punkt metallische Berührung zwischen Mitnehmerscheibe und Schwungrad bzw. Druckplatte vorliegt.

Nachteilig ist bei der Verwendung eines Klebstoffs bei der Anbindung eines Reibbelags an einer Kupplungsscheibe, dass in der Regel Lösungsmittel benötigt werden, um den Klebstoff in eine Konsistenz zu bringen, in der er einfach verarbeitet und insbesondere aufgebracht werden kann. Ist der Klebstoff in Lösungsmittel gelöst, kann er nämlich in einfacher Weise mittels Walzen oder Stempeln oder durch Sprühen in Vorbereitung der Verklebung auf den Reibbelag bzw. auf die Kupplungsscheibe aufgebracht werden. Damit geht in nachteiliger Weise eine nicht unerhebliche Umweltbelastung bzw. eine Belastung des Arbeitsplatzes bei der Herstellung der Kupplungsscheiben einher.

Das Lösungsmittel wird beim Klebeprozess nur zum Verflüssigen des Klebstoffs benötigt, um den Klebstoff aufzutragen. Anschließend muss das Lösungsmittel aus dem Klebstoff wieder entfernt werden, was z. B. durch Wärmeeinwirkung (z. B. in einem Bandofen) erfolgen kann.

Zur Vermeidung der Belastung sowohl der Umwelt als auch des Arbeitsplatzes wäre es vorteilhaft, auf das Lösungsmittel im Klebstoff verzichten zu können. Dann allerdings sind bislang erhebliche Einschränkungen bei der Verarbeitung zu machen.

Demgemäß liegt der Erfindung die **Aufgabe** zugrunde, ein Verfahren der eingangs genannten Art sowie eine Kupplungsscheibe so weiterzubilden, dass unter Verzicht auf ein Lösungsmittel im Klebstoff, mit dem die Anbindung des Reibbelags an der Kupplungsscheibe bewerkstelligt wird, eine einfache Möglichkeit geschaffen wird, prozesssicher den Verbindungsprozess vorzunehmen. Bei voller Beibehaltung der Festigkeit der Klebeverbindung soll damit ein umweltfreundlicheres Arbeiten sichergestellt werden.

Die **Lösung** dieser Aufgabe durch die Erfindung ist verfahrensgemäß dadurch gekennzeichnet, dass das Aufbringen des Klebstoffs auf die Kupplungsscheibe und/oder auf den Reibbelag gemäß obigem Schritt a) in Pulverform erfolgt.

Erfindungsgemäß wird also ein lösungsmittelfreier Klebstoff in Pulverform verwendet, der auf mindestens eines der zu verklebenden Bauteile - entweder auf den Reibbelag (was bevorzugt ist) und/oder auf die Kupplungsscheibe - aufgebracht wird.

Dabei ist insbesondere vorgesehen, dass der Klebstoff in Pulverform auf das mit Klebstoff zu versehende Teil aufgestreut wird. Der Aufbringprozess des Klebstoffs erfolgt damit ohne Lösungsmittel.

Eine hierzu alternative Möglichkeit bei der Vorgehensweise besteht darin, dass der Klebstoff in Pulverform mit Wasser vermischt und das Gemisch nach obigem Schritt a) auf das mit Klebstoff zu versehende Teil aufgesprüht wird. Hiernach wird das Wasser-Pulver-Gemisch auf die mit Klebstoff zu versehene Oberfläche aufgesprüht, um das Pulver quasi in die Oberfläche zu waschen. Vor der Durchführung des obigen Schritts b) wird vorzugsweise ein Erhitzen des aufgesprühten Gemisches vorgenommen, um das Wasser zum Verdampfen zu bringen; zurück bleibt der Klebstoff, lösungsmittelfrei aufgebracht (Wasser ist in diesem Sinne kein umweltschädliches Lösungsmittel).

Die Handhabung des mit Klebstoff versehenen Bauteils - zumeist und bevorzugt ist es der Reibbelag - kann dadurch verbessert werden, dass nach der Durchführung des obigen Schritts a) und vor Durchführung des obigen Schritts b) eine Fixierung des auf das Bauteil aufgebrachten Klebstoffs erfolgt. Eine diesbezügliche Möglichkeit sieht vor, dass das Fixieren des Klebstoffs durch Erwärmung des Klebstoffs samt Bauteil erfolgt. Diese Erwärmung erfolgt bevorzugt auf eine Temperatur zwischen 70 °C und 140 °C; besonders bevorzugt hat sich eine Temperatur von ca. 100 °C bewährt, die allerdings von der Art des Klebstoffs abhängt (vorliegend handelt es sich um Phenolharz als Klebstoff).

Das Fixieren des Klebstoffs kann gemäß einer alternativen Möglichkeit beispielsweise auch durch elektrostatische Aufladung des Klebstoffs bzw. des Bauteils erfolgen.

Das Aushärtenlassen nach obigem Schritt c) kann unter Verpressen des Reibbelags und der Kupplungsscheibe erfolgen. Dabei kann es - in Abhängigkeit des vorgesehenen Klebstoffs - bereits ausreichen, dass das Aushärtenlassen bei Raumtemperatur erfolgt. Alternativ ist es auch möglich, dass das Aushärtenlassen bei gegenüber Raumtemperatur erhöhter Temperatur erfolgt.

Als Klebstoff kommt bevorzugt Phenolharz zum Einsatz.

Die erfindungsgemäße Kupplungsscheibe, an der mittels eines Klebstoffs mindestens ein Reibbelag angebracht ist, zeichnet sich erfindungsgemäß dadurch aus, dass ein Klebstoff in Pulverform zwischen die Kupplungsscheibe und den Reibbelag eingebracht ist.

Mit der vorgeschlagenen Vorgehensweise ist eine feste Klebverbindung zwischen dem Reibbelag und der Kupplungsscheibe gegeben, ohne irgendwelche Umwelt- bzw. Arbeitsplatzbelastungen in Kauf nehmen zu müssen.

In der Zeichnung ist ein Ausführungsbeispiel der Erfindung dargestellt. Es zeigen:
- Fig. 1: einen Reibbelag einer Kupplungsscheibe, der in einem ersten Verfahrensstadium mit Klebstoff versehen wird,
- Fig. 2: den Reibbelag in einem späteren Verfahrensstadium, in dem der aufgebrachte Klebstoff auf dem Reibbelag fixiert wird,
- Fig. 3: den Reibbelag in einem noch späteren Verfahrensstadium, wenn er mit einer Kupplungsscheibe gefügt wird, und
- Fig. 4: das Verpressen von Reibbelag und Kupplungsscheibe während eines noch späteren Verfahrensstadium, kurz vor dem Abschluss des Verfahrens.

In den Figuren ist die Abfolge eines Verbindungsprozesses dargestellt, durch den ein Reibbelag 1 auf eine Kupplungsscheibe 2 aufgeklebt wird. Dies erfolgt durch Einsatz eines Klebstoffs 3 in Form eines Phenolharzes, der lösungsmittelfrei und in Pulverform verarbeitet wird.

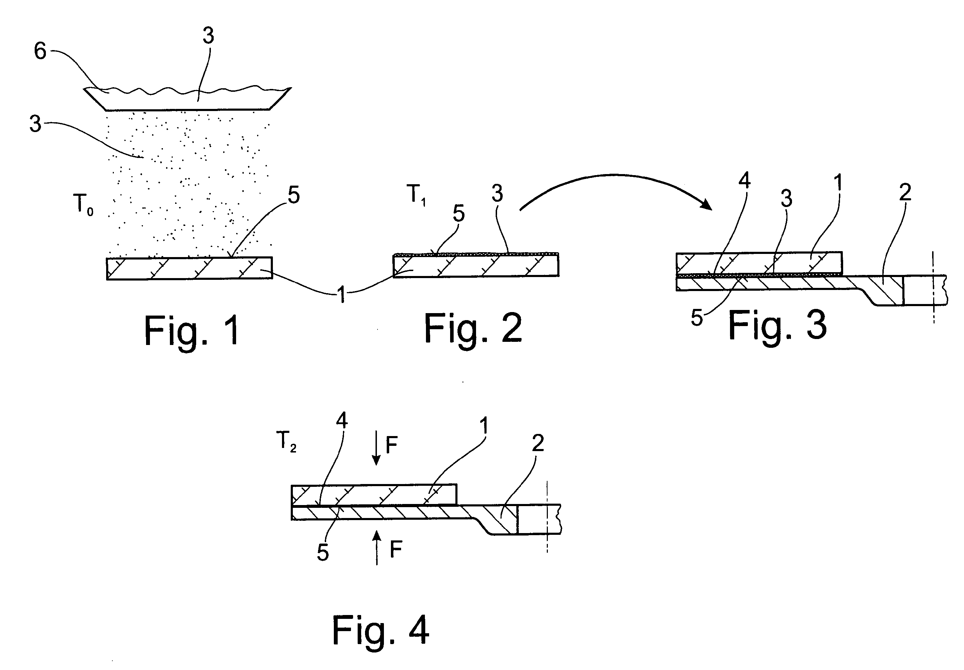

Gemäß Fig. 1 wird der Reibbelag auf einer geeigneten Unterlage mit seiner mit Klebstoff 3 zu versehenen Seite 5 nach oben ausgerichtet aufgelegt. Eine Streuvorrichtung 6 (Sieb) enthält den Klebstoff 3 in Pulverform, wobei dieser beispielsweise durch Rütteln der Streuvorrichtung 6 nach unten rieselt und sich auf der Seite 5 des Reibbelags 3 ablagert. Es erfolgt ein gleichmäßige Auftragen des Klebstoffpulvers.

Dieser Prozess wird so lange ausgeführt, bis sich eine hinreichende Dicke der Schicht aus Klebstoffpulver auf der Seite 5 abgelagert hat.

Im Anschluss daran wird der Klebstoff 3 auf der Seite 5 des Reibbelags fixiert, was in Fig. 2 illustriert ist. Während das Aufbringen des Klebstoffpulvers gemäß Fig. 1 noch bei Raumtemperatur T₀ erfolge, ist die Temperatur jetzt auf einen höheren Wert von T₁ erhöht. Diese Temperatur ist an den Klebstoff 3 angepasst und entsprechend gewählt. Im Falle des Einsatzes von Phenolharz hat sich ein Wert für die Temperatur T₁ zwischen 70 °C und 140 °C bewährt, insbesondere ein Wert im Bereich von 100 °C.

Durch die Einwirkung der Temperatur T₁ ergibt sich ein Anhaften des Klebstoffs 3 auf dem Reibbelag 1 durch Aufschmelzen des Klebstoffs 3; es bildet sich eine homogene Schicht Klebstoff 3 auf dem Reibbelag 1. Durch dieses Homogenisieren des Klebstoffs 3 auf dem Reibbelag 1 ergibt sich eine höhere Qualität der Verbindung, die sich insbesondere dann vorteilhaft auswirkt, wenn der Reibbelag 1 von Hand mit der Kupplungsscheibe 2 gefügt wird. Das aufgebrachte KlebstoffPulver kann somit nicht mehr von der Oberfläche des Reibbelags 1 abfallen. Allerdings ist dieser Verfahrensschritt nicht zwingend.

In Fig. 3 ist zu sehen, dass der mit Klebstoff 3 versehene Reibbelag 1 mit der Kupplungsscheibe 2 gefügt wird. Der Reibbelag 1 wird, was durch den Pfeil angedeutet ist, gewendet und mit der mit Klebstoff 3 versehenen Seite 5 auf die obere Seite 4 der Kupplungsscheibe 2 gelegt.

Gemäß dem weiteren Verfahrensschritt, der in Fig. 4 illustriert ist, wird eine Kraft F zwischen Reibbelag 1 und Kupplungsscheibe 2 aufgebracht, die die beiden Teile verpresst und dafür sorgt, dass eine innige Klebeverbindung zwischen den Teilen 1, 2 eingegangen wird. Dies kann dadurch gefördert werden, dass der Prozess bei einer erhöhten Temperatur T₂ stattfindet, die gegenüber der Raumtemperatur T₀ erhöht ist.

Die Aushärtbedingungen werden in Abhängigkeit des ausgewählten Klebstoffs gewählt und sind als solche bekannt. Gegebenenfalls ist auch ein Aushärten bei Raumtemperatur T₀ effizient.

Es ist natürlich genauso möglich, dass das Klebstoffpulver nicht auf dem Reibbelag 1, sondern auf der Kupplungsscheibe 2 aufgebracht wird. Möglich ist es ferner, dass beide Teile 1, 2 vor dem Fügen mit Klebstoff 3 versehen werden.

Hat die Kupplungsscheibe 2 (und ggf. der Reibbelag 1) Durchtrittsöffnungen, kann zur Einsprung von Klebstoff 3 wie folgt vorgegangen werden: Nach dem Aufbringen des Klebstoffpulvers wird das Gegenbauteil gefügt; die beiden gefügten Bauteils 1, 2 werden dann um 180° gewendet. Durch die Durchtrittsöffnungen kann dann überschüssiges Klebstoffpulver nach unten durchfallen. Anschließend erfolgt erst die Aushärtung des Klebstoffs.

Das bevorzugte Phenolharz als Klebstoff 3 ist für das Verkleben von Bremsen und Kupplungen als solches bekannt. Der Prozess kann damit auch entsprechend für das Ankleben von Bremsbelägen eingesetzt werden.

Der vorgeschlagene Prozess kann in relativ kurzer Zeit durchgeführt werden, so dass eine wirtschaftliche Fertigung möglich ist.

### Bezugszeichenliste

- 1: Reibbelag
- 2: Kupplungsscheibe
- 3: Klebstoff
- 4: Seite der Kupplungsscheibe
- 5: Seite des Reibbelags
- 6: Streuvorrichtung

- T₀: Raumtemperatur
- T₁: erhöhte Temperatur
- T₂: Verpresstemperatur
- F: Kraft

## Patentansprüche

1. Verfahren zur Befestigung eines Reibbelags (1) an einer Kupplungsscheibe (2), insbesondere an einer Belagfeder der Kupplungsscheibe, das die Schritte aufweist:
a) Aufbringen eines Klebstoffs (3) auf einer Seite (4) der Kupplungsscheibe (2) und/oder auf einer Seite (5) des Reibbelags (1);
b) Fügen des Reibbelags (1) und der Kupplungsscheibe (2);
c) Aushärtenlassen des Klebstoffs (3) zwischen dem Reibbelag (1) und der Kupplungsscheibe (2),
**dadurch gekennzeichnet,**
**dass** das Aufbringen des Klebstoffs (3) auf die Kupplungsscheibe (2) und/oder auf den Reibbelag (1) gemäß Schritt a) in Pulverform erfolgt.

2. Verfahren nach Anspruch 1, **dadurch gekennzeichnet, dass** der Klebstoff (3) in Pulverform nach Schritt a) gemäß Anspruch 1 auf das mit Klebstoff zu versehende Teil (1, 2) aufgestreut wird.

3. Verfahren nach Anspruch 1, **dadurch gekennzeichnet, dass** der Klebstoff (3) in Pulverform mit Wasser vermischt und das Gemisch nach Schritt a) gemäß Anspruch 1 auf das mit Klebstoff zu versehende Teil (1, 2) aufgesprüht wird.

4. Verfahren nach Anspruch 3, **dadurch gekennzeichnet, dass** vor der Durchführung des Schritts b) gemäß Anspruch 1 ein Erhitzen des aufgesprühten Gemisches erfolgt, um das Wasser zum Verdampfen zu bringen.

5. Verfahren nach einem der Ansprüche 1 bis 4, **dadurch gekennzeichnet, dass** nach der Durchführung des Schritts a) gemäß Anspruch 1 und vor Durchführung des Schritts b) gemäß Anspruch 1 eine Fixierung des auf das Bauteil (1, 2) aufgebrauchten Klebstoffs (3) erfolgt.

6. Verfahren nach Anspruch 5, **dadurch gekennzeichnet, dass** das Fixieren des Klebstoffs (3) durch Erwärmung (T₁) des Klebstoffs (3) samt Bauteil (1, 2) erfolgt.

7. Verfahren nach Anspruch 6, **dadurch gekennzeichnet, dass** die Erwärmung auf eine Temperatur (T₁) zwischen 70°C und 140 °C erfolgt.

8. Verfahren nach Anspruch 7, **dadurch gekennzeichnet, dass** die Erwärmung auf eine Temperatur (T₁) von ca. 100 °C erfolgt.

9. Verfahren nach Anspruch 5, **dadurch gekennzeichnet, dass** das Fixieren des Klebstoffs (3) durch elektrostatische Aufladung des Klebstoffs (3) bzw. des Bauteils (1, 2) erfolgt.

10. Verfahren nach einem der Ansprüche 1 bis 9, **dadurch gekennzeichnet, dass** das Aushärtenlassen nach Schritt c) gemäß Anspruch 1 unter Verpressen des Reibbelags (1) und der Kupplungsscheibe (2) erfolgt.

11. Verfahren nach einem der Ansprüche 1 bis 10, **dadurch gekennzeichnet, dass** das Aushärtenlassen nach Schritt c) gemäß Anspruch 1 bei Raumtemperatur (T₀) erfolgt.

12. Verfahren nach einem der Ansprüche 1 bis 10, **dadurch gekennzeichnet, dass** das Aushärtenlassen nach Schritt c) gemäß Anspruch 1 bei gegenüber Raumtemperatur (T₀) erhöhter Temperatur (T₂) erfolgt.

13. Verfahren nach einem der Ansprüche 1 bis 12, **dadurch gekennzeichnet, dass** als Klebstoff (3) Phenolharz verwendet wird.

14. Kupplungsscheibe (2), an der mittels eines Klebstoffs (3) mindestens ein Reibbelag (1) angebracht ist,
**dadurch gekennzeichnet,**
**dass** ein Klebstoff in Pulverform zwischen die Kupplungsscheibe (2) und den Reibbelag (1) eingebracht ist.

15. Kupplungsscheibe nach Anspruch 14, **dadurch gekennzeichnet, dass** der Klebstoff (3) ein Phenolharz ist.
